# FASCICULE DE BREVET EUROPEEN

(11) **EP 0 555 130 B1**
(45) Date de publication et mention de la délivrance du brevet: **23.09.1998**
(21) Numéro de dépôt: 93400235.3
(22) Date de dépôt: 01.02.1993
(51) Int. Cl.: C04B 35/80, C04B 35/56

(54) **Procédé de fabrication de pièces en matériau composite à matrice céramique**
Verfahren zur Herstellung von Teilen aus Verbundwerkstoff mit keramischer Matrix
Method of making composite material parts having a ceramic matrix

(30) Priorité: 04.02.1992 FR 9201237
(43) Date de publication de la demande: 11.08.1993
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Balhadère, Aline, F-33930 Vendays, Montalivet (FR); Bernard, Bruno C., F-33320 Eysines (FR); Moreau, Jacques André, F-33200 Bordeaux (FR); Mouricou, Isabelle, F-33460 Arsac (FR); Rodin-Brosse, Christian, F-33160 Le Haillan (FR)
(74) Mandataire: Joly, Jean-Jacques

(56) Documents cités:
- EP-A- 421 418
- FR-A- 2 640 258
- CHEMICAL ABSTRACTS, vol. 114, no. 14, 1990, Columbus, Ohio, US; abstract no. 127824z, Y. SUDA 'Manufacture of carbon-based products'

## Description

La présente invention concerne la fabrication de pièces en matériau composite à matrice céramique (CMC). Plus précisément, l'invention concerne un procédé de fabrication de pièces en CMC du type comprenant l'élaboration d'une préforme fibreuse consolidée par imprégnation par voie liquide, et la densification de la préforme consolidée.

Les CMC sont, avec les composites carbone/carbone, des matériaux composites thermostructuraux caractérisés par des bonnes propriétés mécaniques qui les rendent aptes à constituer des éléments de structure, et par leur faculté de conserver ces propriétés mécaniques jusquà des températures élevées.

Les composites thermostructuraux trouvent notamment des applications dans les domaines aéronautique et spatial, en particulier pour la réalisation de pièces de moteurs d'avion, ou d'éléments de structure de véhicules spatiaux.

La fabrication d'une pièce en matériau composite comprend généralement la réalisation d'une préforme fibreuse, dont la forme est voisine de celle de la pièce à fabriquer, et la densification de la préforme par la matrice.

La préforme fibreuse constitue le renfort de la pièce qui confère à celle-ci l'essentiel de ses propriétés mécaniques. La préforme est obtenue à partir de textures fibreuses telles que des fils, tissus, feutres, câbles, ... La mise en forme est réalisée par bobinage, tissage, empilage de strates bidimensionnelles de tissu du de nappes de câbles, ...

La densification de la préforme fibreuse par la matrice consiste à combler la porosité de la préforme, dans tout le volume de celle-ci, par le matériau constitutif de la matrice.

Une première technique de densification (voie liquide) consiste à imprégner la préforme par une composition liquide contenant un précurseur du matériau de la matrice puis, éventuellenent après séchage et polymérisation, à soumettre la préforme imprégnée à un traitement thermique pour transformer le précurseur. Plusieurs cycles consécutifs, depuis l'imprégnation jusqu'au traitement thermique, sont habituellement nécessaires pour atteindre le degré souhaité de densification.

Une deuxième technique de densification (voie gazeuse) consiste à réaliser une infiltration chimique en phase vapeur du matériau constitutif de la matrice au sein de la préforme. A cet effet, la préforme est placée dans un four d'infiltration dans lequel est admise une phase gazeuse. Dans des conditions de température et de pression déterminées, la phase gazeuse pénètre jusqu'au coeur de la préforme et, au contact des fibres, le matériau de la matrice est formé par décomposition de la phase gazeuse ou réaction entre ses constituants.

Pour conserver la préforme fibreuse dans la forme désirée lors de l'infiltration chimique en phase vapeur, il est nécessaire, au moins dans une première partie du processus de densification, de maintenir la préforme dans un outillage, généralement réalisé en graphite. Un tel outillage massif est coûteux à réaliser, en particulier lorsque la préforme a une forme complexe ; il nécessite aussi l'usinage de nombreux trous permettant à la phase gazeuse d'accéder à la préforme à travers l'outillage. De plus, l'outillage est lourd et encombrant.

Or, l'infiltration chimique est généralenent un processus très long et très coûteux. A titre indicatif, une phase de densification dure typiquement plusieurs centaines d'heures. Aussi, la présence d'outillages occupant une fraction appréciable du volume utile du four d'infiltration et présentant une inertie thermique importante constitue un élément pénalisant. De plus, il se forme inévitablement un dépôt du matériau de la matrice sur les outillages, ayant pour conséquence d'importants rebuts par collage entre préforme et outillage. Par ailleurs, dans le meilleur des cas, ces dépôts nécessitent la rénovation fréquente des outillages.

La présence de l'outillage lors de l'infiltration chimique en phase vapeur n'est nécessaire que jusqu'à consolidation de la préforme. Ce stade est atteint lorsque le matériau constitutif de la matrice a été déposé en quantité suffisante pour lier les fibres dans tout le volume de la préforme, afin que la préforme. après retrait de l'outillage, reste dans la forme désirée et puisse être manipulée. La fin de la densification peut alors être réalisée sur la préforme hors outillage. Il reste que l'outillage est nécessaire au moins pendant une partie de l'infiltration, et que celle-ci doit être interrompue pour permettre le retrait de l'outillage après consolidation de la préforme.

Il est donc souhaitable de pouvoir réaliser tout le processus d'infiltration chimique en phase vapeur sans nécessiter le maintien de la préforme dans un outillage.

Dans le cas d'un matériau composite à matrice carbone, une consolidation de la préforme, avant infiltration chimique en phase vapeur, peut être réalisée par voie liquide. La préforme est imprégnée par un précurseur du carbone, par exemple une résine ayant un taux de coke élevé. La préforme imprégnée, maintenue dans un outillage, ou conformateur, subit un séchage pour éliminer un solvant éventuel, puis la résine précurseur du carbone est polymérisée et un traitement thermique est réalisé pour provoquer la pyrolyse du précurseur et laisser un résidu carboné qui assure la consolidation de la préforme.

Une technique analogue de consolidation peut être imaginée dans le cas de CMC. Il a en effet été proposé dans le document EP-A-0 421 418 de réaliser des pièces céramiques par imprégnation de feuilles non organiques au moyen d'une solution contenant un polymère précurseur de céramique et traitement thermique sous air pour transformer le précurseur. Toutefois, les essais, effectués par la demanderesse, de consolidation d'une préforme fibreuse par imprégnation par voie liquide au moyen d'un précurseur de céramique de type organo-silicié, notamment le polycarbosilane (PCS) précurseur du carbure de silicium (SiC), et utilisant des procédés classiques de réticulation de ces précurseurs, n'ont pas donné satisfaction.

Des pièces en CMC ont été réalisées à partir de préformes fibreuses en carbone ou en carbure de silicium, consolidées par imprégnation par une solution de PCS, séchage, réticulation par l'oxygène de l'air et traitement thermique, les préformes consolidées ayant été densifiées par infiltration chimique en phase vapeur de carbure de silicium. Les pièces ainsi réalisées ont montré des propriétés mécaniques notablement inférieures à celles obtenues lorsque la consolidation est effectuée par infiltration chimique en phase vapeur.

Cette détérioration des propriétés semble avoir pour origine la technique utilisée pour la réticulation du PCS. En effet, une réticulation homogène est pratiquement impossible à obtenir dans tout le volume de la préforme, en particulier lorsque celle-ci est de forte épaisseur. Il en résulte un gradient de réticulation et même la présence de zones où le PCS est non réticulé, donc non rendu infusible, et passe à l'état liquide lors du traitement thermique. En outre, l'utilisation d'un outillage de maintien très résistant est nécessaire pour s'opposer à la déformation du substrat due à la production d'espèces volatiles lors de la pyrolyse. De plus, la présence d'oxydes dans le résidu céramique risque de limiter la réfractarité du CMC.

D'autres techniques connues de réticulation du PCS, comme la réticulation par le soufre ou par rayonnement électromagnétique ou bombardement électronique, ou par traitement au plasma, ne pourraient non plus donner satisfaction, même si l'introduction d'oxygène au sein du résidu céramique est évitée.

Le soufre peut constituer une source de pollution. L'utilisation de rayonnement conduit généralement à un traitement de longue durée et demande, comme le bombardement électronique, une installation lourde et coûteuse. Enfin, le traitement au plasma demande aussi une installation coûteuse et n'est efficace que pour une épaisseur limitée.

Aussi, la présente invention a-t-elle pour but de fournir un procédé de fabrication de pièces en CMC dans lequel la consolidation de la préforme peut être effectuée par imprégnation par voie liquide au moyen d'un précurseur de céramique, avant densification par infiltration chimique en phase vapeur ou par voie liquide, sans présenter les inconvénients précités, et sans affecter les propriétés mécaniques des pièces obtenues.

Ce but est atteint du fait que, conformément à l'invention, une consolidation de la préforme est réalisée par imprégnation au moyen d'une composition d'imprégnation comprenant un mélange d'un monomère thermodurcissable et d'un polymère organo-silicié précurseur de céramique, et par traitement thermique au cours duquel la réticulation du monomère est d'abord réalisée, de sorte qu'une réticulation in situ du mélange polymérique est obtenue dans tout le volume de la préforme, avant transformation du précurseur en céramique, et une densification par une matrice céramique de la préforme consolidée est ensuite réalisée. Il est important de remarquer que la réticulation du mélange polymérique est uniformément réalisée dans tout le volume de la préforme, quelle que soit l'épaisseur de celle-ci.

La composition d'imprégnation peut être complétée par un accélérateur de réticulation du monomère thermodurcissable.

Selon un mode de réalisation de l'invention, le précurseur de céramique est un polymère organo-silicié tel que le PCS, précurseur de SiC, tandis que le monomère thermodurcissable est un monomère acrylique. En tant qu'accélérateur de réticulation du monomère, ajouté à la composition d'imprégnation, on peut alors utiliser du peroxyde de dicumyle.

Le monomère acrylique est choisi parmi ceux possédant un solvant commun avec le polymère organo-silicié. Il est préférable en outre que le polymère acrylique obtenu ait un taux de coke aussi faible que possible afin de ne pas laisser de résidu carbone en quantité significative après pyrolyse.

Les monomères trifonctionnels constitués par le triméthylol propane triméthacrylate (TMPTMA) et le triméthylol propane triacrylate (TMPTA) conviennent à cet effet, leurs taux de coke étant respectivement de 2 % et 5 % en poids.

D'autres monomères acryliques multifonctionnels peuvent être utilisés, comme, par exemple, les éhoxy acrylates, isocyanurate acrylates, érythritol acrylates et époxy acrylates.

Lorsque le précurseur de céramique est le PCS et qu'il est associé à un monomère acrylique tel que le TMPTMA ou le TMPTA, le solvant utilisé pour réaliser la composition d'imprégnation liquide est choisi par exemple entre le trichloro 1, 1, 1 éthane (TCE) et l'hexane.

Des exemples de mise en oeuvre du procédé conforme à l'invention, pour la fabrication de pièces en matériau composite à matrice SiC, seront maintenant décrits à titre indicatif mais non limitatif.

Dans ces exemples, la composition d'imprégnation est constituée de PCS et de TMPTMA, en solution dans le TCE ou l'hexane, avec du peroxide de dicumyle en tant qu'accélérateur de réticulation du TMPTMA. Les quantités respectives en poids, de PCS et de TMPTMA dans la composition d'imprégnation sont dans une proportion comprise entre 80/20 et 40/60, de préférence environ égale à 60/40. Le peroxyde de dicumyle est présent à raison d'environ 2 à 3 % en poids par rapport au poids du TMPTMA.

### Exemple 1

Dans cet exemple, l'imprégnation, en vue de la consolidation de la préforme, est réalisée après l'élaboration de celle-ci.

La préforme est réalisée par découpe de strates de tissu, empilage de celles-ci et introduction des strates empilées dans un outillage conformateur donnant à la préforme le taux de fibres et la forme désirés (le taux de fibres est le pourcentage du volume apparent de la préforme effectivement occupé par les fibres).

La préforme étant maintenue dans l'outillage, il est déposé sur les fibres un mince revêtement en carbone destiné à constituer une interphase entre les fibres de la préforme et le matériau céramique de la matrice. L'interphase carbone peut être formée par un coke de résine, comme décrit dans le brevet EP 0 127 491, ou par du pyrocarbone obtenu par infiltration chimique en phase vapeur, comme décrit dans le brevet EP 0 172 082.

Une composition d'imprégnation est préparée en faisant dissoudre sous agitation permanente 60 pp de PCS grossièrement broyé dans 90 pp de TCE. Après dissolution complète, sont ajoutées 40 pp de TMPTMA et 0,80 pp de peroxyde de dicumyle.

La préforme maintenue dans son outillage et munie de l'interphase carbone est placée dans une enceinte ou le vide est établi avant introduction de la composition d'imprégnation.

Après imprégnation et retour à la pression atmosphérique, il est procédé à un séchage en étuve à environ 80° C pour évaporation totale du solvant, laissant une phase translucide homogène, ou "gel".

La réticulation du TMPTMA est ensuite réalisée en étuve en portant la température de la préforme à 90° C pendant 1 heure puis à 120° C, voire 150° C pendant 1 heure 30.

La préforme étant toujours maintenue dans son outillage, il est procédé à un traitement thermique de pyrolyse dans un four sous atmosphère neutre (balayage d'azote). Au cours du traitement thermique, la température est progressivement élevée jusqu'à 900° C pendant une durée comprise entre 40 heures et 130 heures, de façon à provoquer la transformation du mélange polymérique infusible en SiC.

Après traitement thermique, la préforme consolidée par le SiC provenant du PCS est retirée de l'outillage et placée dans un four d'infiltration SiC pour être densifiée par infiltration chimique en phase vapeur, par exemple comme décrit dans le brevet FR 2 401 888. La densification est poursuivie jusqu'à atteindre une porosité résiduelle comprise entre 10 % et 15%.

Le tableau I ci-après donne des résultats d'essais en traction effectués sur des pièces A et B ainsi fabriquées, respectivement à partir d'une préforme en tissu de fibres de carbone et d'une préforme en tissu de fibres SiC. Avant imprégnation, les préformes ont été munies d'un revêtement d'interphase en carbone pyrolytique (PyC), d'épaisseur 1 micron pour les fibres de carbone et 0,1 micron pour les fibres SiC. Ce dépôt a été obtenu par infiltration chimique en phase vapeur. Le tableau I donne aussi les résultats d'essai en traction effectué sur une pièce C fabriquée de façon semblable, mais à partir d'une préforme en tissu de fibres SiC ayant subi un traitement chimique qui vise notamment à éliminer la silice présente à la surface des fibres, tel que décrit dans le brevet FR 88 06307 (publication 2 640 258). Après ce traitement, une interphase en carbone pyrolitique d'épaisseur 0,1 micron est réalisée par infiltration chimique en phase vapeur.

A titre de comparaison, figurent dans le tableau I les résultats d'essais en traction identiques effectués sur des pièces A',B' et C' fabriquées à partir des mêmes préformes que les pièces A, B et C, avec les mêmes interphases respectives, mais consolidées par infiltration chimique en phase vapeur (voie gazeuse), comme dans l'art antérieur.

Dans le tableau I, R_{T}, et E désignent respectivement la résistance en traction, l'allongement à rupture et le module d'Young. La densité des pièces est également indiquée.

**Tableau I**

| Pièce | A | B | C | A' | B' | C' |
|---|---|---|---|---|---|---|
| Prèforme | tissu C | tissu SiC | tissu SiC | tissu C | tissu SiC | tissu SiC |
| Interphase PyC | 1 micron | 0,1 micron | 0,1 micron | 1 micron | 0,1 micron | 0,1 micron |
| Consolidation | voie liquide | voie liquide | voie liquide | voie gazeuse | voie gazeuse | voie gazeuse |
| R_{T}(MPa) | 440 | 210 | 300 | 480 | 180 | 280 |
| (%) | 1 | 0,37 | 0,69 | 0,95 | 0,21 | 0,60 |
| E(GPa) | 67 | 140 | 190 | 83 | 200 | 200 |
| Densité | 1,9 | 2,3 | 2,3 | 2,1 | 2,5 | 2,5 |

Du tableau I, il ressort que les pièces obtenues par le procédé conforme à l'invention ont des perfomances mécaniques du même ordre que celles des pièces obtenues par consolidation de la préforme par voie gazeuse. Le procédé selon l'invention est donc particulièrement avantageux puisque la consolidation de la préforme par voie liquide permet de réaliser une économie de prix de revient qui a été chiffrée au minimum à 30 % du fait du gain de temps de fabrication et d'une meilleure utilisation des fours d'infiltration. On note aussi que le procédé conforme à l'invention permet d'obtenir des pièces de moindre densité que celles dont la préforme a été consolidée par voie gazeuse.

### Exemple 2A

Dans cet exemple, l'imprégnation est réalisée sur la texture fibreuse utilisée pour l'élaboration de la préforme, avant formation de celle-ci.

Du tissu en fibres C se présentant par exemple en rouleau est soumis à un traitement préalable pour former sur les fibres un revêtement d'interphase en carbone. Le revêtement est formé, par exemple par infiltration chimique en phase vapeur, avec une épaisseur relativement faible, environ 0,1 micron, pour éviter la rigidification du tissu.

Le tissu muni du revêtement d'interphase est imprégné par passage dans un bain en continu suivi d'un séchage dans un tunnel à 80° C pendant un temps de trajet de 5 mn. La composition d'imprégnation est identique à celle de l'exemple 1.

Des strates de tissu imprégné sec sont découpées et moulées sous presse chauffante pour obtenir la préforme désirée. La température de la préforme est portée uniformément à 80° C puis, les plateaux de la presse étant mis en pression pour s'opposer à une déformation éventuelle de la préforme, la température de celle-ci est élevée à 120° C en 15 mn puis maintenue à cette valeur pendant 1 heure 30

Après refroidissement dans la presse, la préforme est démoulée pour être pyrolysée puis densifiée par infiltration de SiC en phase vapeur comme dans l'exemple 1.

### Exemple 2B

On procède comme dans l'exemple 2A en utilisant une composition d'imprégnation différente constituée de 80 pp de PCS, 80 pp d'hexane, 20 pp de TMPTMA et 0,6 pp de peroxyde de dicumyle.

### Exemple 2C

On procède comme dans l'exemple 2B en utilisant une composition d'imprégnation différente constituée de 40 pp de PCS, 60 pp d'hexane, 60 pp de TMPTMA et 1,2 pp de peroxide de dicumyle.

Le tableau II donne les résultats d'essais en traction effectués sur des pièces D, E, F obtenues par les procédés des exemples 2A, 2B, 2C. A titre de comparaison sont présentés les résultats obtenus sur une pièce D' fabriquée à partir d'une préforme identique à celle de la pièce D, avec la même interphase carbone, mais consolidée par infiltration chimique en phase vapeur (voie gazeuse), comme dans l'art antérieur.

Dans le tableau II, RCI désigne la résistance au cisaillement interlaminaire (c'est-à-dire parallèlement aux plans des strates de la préforme).

**Tableau II**

| Pièce | D | E | F | D' |
|---|---|---|---|---|
| Préforme | Tissu C | Tissu C | Tissu C | Tissu C |
| Consolidation | voie liquide | voie liquide | voie liquide | voie gazeuse |
| PCS/TMPTMA | 60/40 | 80/20 | 40/60 | |
| R_{T}(MPa) | 330 | 270 | 270 | 260 |
| (%) | 0,81 | 0,68 | 0,62 | 0,87 |
| E(GPa) | 82 | 95 | 82 | 110 |
| RCI (MPa) | 25 | environ 21 | 20 | environ 19 |
| Densité | 1,82 | 1,87 | 1,73 | 2 |

Le tableau II montre que les pièces obtenues par le procédé selon l'invention ont des performances comparables à celles des pièces obtenues par le procédé de l'art antérieur, les performances de la pièce D étant sensiblement supérieures à celles des pièces E et F, en outre avec une densité inférieure.

### Exemple 3A

On procède comme dans l'exemple 2A en remplaçant le tissu de fibres C par un tissu de fibres SiC.

### Exemple 3B

On procède comme dans l'exemple 3A en utilisant une composition d'imprégnation différente constituée de 50 pp de PCS, 75 pp de TCE, 50 pp de TMPTMA et 1 pp de peroxyde de dicumyle.

### Exemple 3C

On procède comme dans l'exemple 3A en utilisant une composition d'imprégnation différente constituée de 40 pp de PCS 60 pp de TCE, 60 pp de TMPTMA et 1,2 pp de peroxyde de dicumyle.

Le tableau III donne les résultats d'essais en traction effectués sur des pièces G, H, I obtenues par les procédés des exemples 3A, 3B, 3C. A titre de comparaison, sont rappelés les résultats obtenus sur la pièce B' déjà citée.

**Tableau III**

| Pièce | G | H | I | B' |
|---|---|---|---|---|
| Préforme | Tissu SiC | Tissu SiC | Tissu SiC | Tissu SiC |
| Consolidation | voie liquide | voie liquide | voie liquide | voie gazeuse |
| PCS/TMPTMA | 60/40 | 50/50 | 40/60 | |
| R_{T}(MPa) | 210 | 200 | 220 | 180 |
| (%) | 0,37 | 0,38 | 0,53 | 0,21 |
| E(GPa) | 140 | 120 | 110 | 200 |
| RCI (MPa) | 39 | 20 | 13 | 30 |
| Densité | 2,4 | 2,3 | 2,1 | 2,5 |

Le tableau III montre encore que le procédé selon l'invention permet d'obtenir des résultats comparables à ceux procurés par le procédé de consolidation par voie gazeuse de l'art antérieur, en outre avec une densité inférieure.

## Revendications

1. Procédé de fabrication de pièce en matériau composite à matrice céramique comprenant l'élaboration d'une préforme fibreuse, l'imprégnation de la préforme au moyen d'une composition d'imprégnation comprenant un polymère organo-silicié précurseur de céramique, et la réalisation d'un traitement thermique à l'issue duquel le précurseur est transformé en céramique sans passer par une phase fusible, caractérisé en ce que :
- une consolidation de la préforme est réalisée par imprégnation au moyen d'une composition d'imprégnation comprenant un mélange d'un monomère thermodurcissable et du polymère précurseur de céramique et par traitement thermique au cours duquel la réticulation du monomère est d'abord réalisée, de sorte qu'une réticulation in situ du mélange polymérique est obtenue dans tout le volume de la préforme, avant transformation du précurseur en céramique, et
- une densification par une matrice céramique de la préforme consolidée est ensuite réalisée.

2. Procédé selon la revendication 1, caractérisé en ce que la composition d'imprégnation comprend en outre un accélérateur de réticulation du monomère thermodurcissable.

3. Procédé selon l'une quelconque des revendications 1 et 2, caractérisé en ce que le monomère thermodurcissable est un monomère acrylique

4. Procédé selon la revendication 3, caractérisé en ce que la composition d'imprégnation comprend en outre du peroxyde de dicumyle en tant qu'accélérateur de réticulation du monomère acrylique.

5. Procédé selon l'une quelconque des revendications 3 et 4, caractérisé en ce que le précurseur organo-silicié est du polycarbosilane.

6. Procédé selon la revendication 5, caractérisé en ce que le polycarbosilane et le monomère acrylique sont en solution dans un solvant choisi parmi le trichloro 1, 1, 1 éthane et l'hexane.

7. Procédé selon l'une quelconque des revendications 3 à 6, caractérisé en ce que le monomère acrylique est choisi parmi le triméthylol propane triméthacrylate et le triméthylol propane triacrylate.

8. Procédé selon la revendication 7 dépendant de la revendication 5, caractérisé en ce que les proportions en poids de polycarbosilane et de monomère acrylique dans la composition d'imprégnation sont dans un rapport compris entre environ 80/20 et 40/60.

9. Procédé selon l'une quelconque des revendications 1 à 8, caractérisé en ce que la préforme fibreuse est réalisée par mise en forme d'une texture fibreuse et maintien dans un outillage avant imprégnation de la préforme par la composition d'imprégnation.

10. Procédé selon l'une quelconque des revendications 1 à 8, caractérisé en ce que la préforme fibreuse est réalisée par mise en forme d'une texture fibreuse préalablement imprégnée par la composition d'imprégnation.

11. Procédé selon l'une quelconque des revendications 9 et 10, caractérisé en ce qu'un revêtement d'interphase est formé sur les fibres de la texture fibreuse avant imprégnation.

## Claims

1. A method of manufacturing ceramic matrix composite material parts, the method comprising making a fiber preform, impregnating the preform by means of an impregnation composition comprising a ceramic precursor organosilicon polymer, and performing heat treatment at the end of which the precursor is transformed into ceramic without passing through a meltable phase, said method being characterized in that:
consolidation of the preform is performed by impregnation by means of an impregnation composition comprising a mixture of a thermosetting monomer and the ceramic precursor polymer, and by heat treatment during which the monomer is initially cross-linked such that "in situ" cross-linking of the polymer mixture is obtained throughout the volume of the preform, prior to the precursor being transformed into ceramic; and
densification by a ceramic matrix of the consolidated preform is then performed.

2. A method according to claim 1, characterized in that the impregnation composition further includes an accelerator for accelerating the cross-linking of the thermosetting monomer.

3. A method according to claim 1 or 2, characterized in that the thermosetting monomer is an acrylic monomer.

4. A method according to claim 3, characterized in that the impregnation composition further includes dicumyl peroxide as an accelerator for accelerating cross-linking of the acrylic monomer.

5. A method according to claim 3 or 4, characterized in that the organosilicon precursor is polycarbosilane.

6. A method according to claim 5, characterized in that the polycarbosilane and the acrylic monomer are in solution in a solvent selected from 1,1,1-trichloroethane and hexane.

7. A method according to any one of claims 3 to 6, characterized in that the acrylic monomer is selected from trimethylol propane trimethacrylate and trimethylol propane triacrylate.

8. A method according to claim 7 as dependent on claim 5, characterized in that the parts by weight of polycarbosilane and of acrylic monomer in the impregnation composition are in a ratio lying in the range of about 80/20 to about 40/60.

9. A method according to any one of claims 1 to 8, characterized in that the fiber preform is made by shaping a fiber fabric and by holding it in tooling prior to the preform being impregnated with the impregnation composition.

10. A method according to any one of claims 1 to 8, characterized in that the fiber preform is made by shaping a fiber fabric that has previously been impregnated with the impregnation composition.

11. A method according to claim 9 or 10, characterized in that an interphase coating is formed on the fibers of the fiber fabric prior to impregnation.

## Patentansprüche

1. Verfahren zur Herstellung eines Teils aus Verbundmaterial mit keramischer Matrix, aufweisend die Anfertigung einer faserigen Vorform, die Imprägnierung der Vorform mittels einer Imprägnierungszusammensetzung, die ein Silicium-organisches Polymer als Keramikvorläufer enthält, und die Durchführung einer thermischen Behandlung, an deren Ende der Vorläufer, ohne eine schmelzbare Phase zu durchlaufen, in Keramik umgewandelt ist, dadurch gekennzeichnet, daß
- eine Verstärkung der Vorform durchgeführt wird durch Imprägnierung mittels einer Imprägnierungszusammensetzung, die ein Gemisch aus einem wärmehärtbaren Monomer und dem Keramikvorläufer-Polymer enthält, und durch thermische Behandlung, in deren Verlauf die Vernetzung des Monomers zuerst dergestalt verwirklicht wird, daß vor der Umwandlung des Vorläufers in Keramik im gesamten Volumen der Vorform eine in situ-Vernetzung des polymeren Gemisches erhalten wird, und dann
- eine Verdichtung der verstärkten Vorform durch eine keramische Matrix durchgeführt wird.

2. Verfahren nach Anspruch 1, dadurch gekennzeichnet, daß die Imprägnierungszusammensetzung außerdem einen Vernetzungsbeschleuniger des wärmehärtbaren Monomers enthält.

3. Verfahren nach Anspruch 1 oder 2, dadurch gekennzeichnet, daß das wärmehärtbare Monomer ein Acrylmonomer ist.

4. Verfahren nach Anspruch 3, dadurch gekennzeichnet, daß die Imprägnierungszusammensetzung außerdem Dicumylperoxid als Vernetzungsbeschleuniger des Acrylmonomers enthält.

5. Verfahren nach Anspruch 3 oder 4, dadurch gekennzeichnet, daß der Silicium-organische Vorläufer Polycarbosilan ist.

6. Verfahren nach Anspruch 5, dadurch gekennzeichnet, daß das Polycarbosilan und das Acrylmonomer in einem Lösungsmittel gelöst sind, das ausgewählt ist aus Trichlor 1,1,1-ethan und Hexan.

7. Verfahren nach einem der Ansprüche 3 bis 6, dadurch gekennzeichnet, daß das Acrylmonomer ausgewählt ist aus Trimethylol-propan-trimethacrylat und Trimethylol-propan-triacrylat.

8. Verfahren nach Anspruch 7 insoweit er von Anspruch 5 abhängig ist, dadurch gekennzeichnet, daß die Gewichtsverhältnisse von Polycarbosilan und Acrylmonomer in der Imprägnierungszusammensetzung in einem Verhältnis zwischen etwa 80/20 und 40/60 sind.

9. Verfahren nach einem der Ansprüche 1 bis 8, dadurch gekennzeichnet, daß die fasrige Vorform hergestellt wird durch in Form Bringen eines Fasergefüges und Festhalten in einem Werkzeug vor der Imprägnierung der Vorform durch die Imprägnierungszusammensetzung.

10. Verfahren nach einen, der Ansprüche 1 bis 8, dadurch gekennzeichnet, daß die fasrige Vorform hergestellt wird durch in Form Bringen eines Fasergefüges, das vorher mit der Imprägnierungszusammensetzung imprägniert wurde.

11. Verfahren nach Anspruch 9 oder 10, durch gekennzeichnet, daß vor der Imprägnierung auf den Fasern des Fasergefüges ein Zwischenphasen-Belag ausgebildet wird.
